# EUROPÄISCHE PATENTSCHRIFT

(11) **EP 0 407 339 B1**
(45) Veröffentlichungstag und Bekanntmachung des Hinweises auf die Patenterteilung: **25.08.1993**
(21) Anmeldenummer: 90810461.5
(22) Anmeldetag: 21.06.1990
(51) Int. Cl.: B24B 55/10, B24B 27/08

(54) **Handgerät mit Trenn- oder Schleifscheibe**
Hand device with a wheel for cutting-off or grinding
Dispositif à main avec un disque à tronçonner ou une meule

(30) Priorität: 01.07.1989 DE 3921778
(43) Veröffentlichungstag der Anmeldung: 09.01.1991
(73) Patentinhaber: HILTI Aktiengesellschaft, 9494 Schaan (LI)
(72) Erfinder: Hoyss, Franz, D-8170 Wackersberg (DE); Reitberger, Rudolf, D-8000 München 70 (DE)
(74) Vertreter: Wildi, Roland

(56) Entgegenhaltungen:
- EP-A- 0 215 476
- AT-B- 341 751
- DE-A- 3 615 736
- FR-A- 377 714

## Beschreibung

Die Erfindung betrifft ein Handgerät mit auf einer Antriebswelle angeordneter Trenn- oder Schleifscheibe und einer die Scheibe teilweise umgebenden Schutzhaube mit beidseits zur Scheibe parallel verlaufenden Seitenwänden, einem die Seitenwände miteinander verbindenden, sich entlang einem Teil des Scheibenumfanges erstreckenden Mantelteil, einem das Mantelteil durchsetzenden Austrittsstutzen für das Bearbeitungsgut sowie einer den Durchtritt eines Segmentes der Scheibe erlaubende Bearbeitungsöffnung.

Aus der US-PS 3 585 980 ist ein Handgerät mit einer teilweise von einer Schutzhaube übergriffenen Trenn- oder Schleifscheibe bekannt. Für das Ableiten des von der Scheibe abgetragenen und in den Innenraum der Schutzhaube geförderten, vorwiegend in Form von Staub anfallenden Bearbeitungsgutes ist ein vom Innenraum nach aussen mündender Austrittsstutzen vorgesehen, der gegebenenfalls mit einem Staubsauger in Verbindung stehen kann.

Aufgrund der Rotation der Scheibe wird das Bearbeitungsgut innerhalb der Schutzhaube entsprechend der Drehbewegung der Scheibe auf der einen Seite der Bearbeitungsöffnung von der Bearbeitungsstelle in die Schutzhaube hinein und auf der anderen Seite der Bearbeitungsöffnung aus der Schutzhaube hinaus gegen die Bearbeitungsstelle geschleudert. Ueber den Austrittsstutzen wird demnach nur ein ganz geringer Teil des Bearbeitungsgutes abgeleitet. Der ganze Rest des Bearbeitungsgutes wird in hinderlicher Weise im Bereich der Bearbeitungsstelle abgelagert.

Der Erfindung liegt die Aufgabe zugrunde, ein Handgerät der eingangs beschriebenen Art zu schaffen, das eine Ablagerung von Bearbeitungsgut im Bereich der Bearbeitungsstelle unterbindet.

Erindungsgemäss wird die Aufgabe dadurch gelöst, dass der Innenraum der Schutzhaube von einer im wesentlichen normal zwischen den Seitenwänden angeordneten, mit einem Schlitz für den Durchtritt der Scheibe versehenen, vom Mantelteil gegen das Zentrum verlaufenden Leitwand in einen im wesentlichen vom Mantelteil begrenzten peripheren Ableitraum und einen im wesentlichen von der Bearbeitungsöffnung begrenzten zentralen Auffangraum unterteilt ist, wobei zumindest der Ableitraum mit dem Austrittsstutzen in Verbindung steht.

Dadurch, dass in Drehrichtung der Scheibe der Auffangraum dem Ableitraum nachgeschaltet ist, wird das Bearbeitungsgut auf der einen Seite der Bearbeitungsöffnung von der Bearbeitungsstelle in den Ableitraum hineingeschleudert und derart vom Leitblech aufgefangen, dass es nicht in den Auffangraum eintreten und damit auf der anderen Seite der Bearbeitungsöffnung wieder gegen die Bearbeitungsstelle geschleudert werden kann. Dank der Verbindung des Ableitraumes mit dem Austrittsstutzen wird das Bearbeitungsgut vom Ableitraum abgeleitet, wobei dieses Ableiten beispielsweise durch eine am Austrittsstutzen angeschlossene Saugeinrichtung unterstützt werden kann. Sollten dennoch geringe Teile an Bearbeitungsgut in den Auffangraum und damit auf der anderen Seite der Bearbeitungsöffnung in den Bereich der Bearbeitungsstelle gelangen, werden diese aufgrund der von der Drehbewegung der Scheibe erzeugten Verwirbelung wieder dem Ableitraum zugeführt und somit auch durch den Austrittsstutzen abgeleitet.

Das Ableiten des Bearbeitungsgutes durch den Austrittsstutzen kann in strömungstechnischer Hinsicht dadurch unterstützt werden, dass der mantelseitige Endbereich der Leitwand fluchtend in die Wandung des Austrittsstutzens übergeht.

Vorzugsweise ist der zentrumsseitige Endbereich der Leitwand gebogen und zwar um einen zum Zentrum gerichteten Radius. Aufgrund dieses gebogenen Endbereiches wird das Zentrum der Scheibe vom Leitblech zum Ableitraum hin übergriffen, was zur Folge hat, dass allfällige Teile an Bearbeitungsgut, welche nicht entlang des Leitbleches dem Austrittsstutzen zugeführt werden, über den gebogenen Endbereich des Leitbleches mit Sicherheit in den Ableitraum gelangen und somit erneut dem Ableitzyklus des von der Bearbeitungsstelle weggeschleuderten Bearbeitungsgutes zugeführt werden. Zu einem ausreichenden Uebergreifen des Zentrums der Scheibe führt beispielsweise ein um einen Winkel von 30° bis 60° gebogener Endbereich der Leitwand.

Vorzugsweise trägt die Leitwand zur Verbesserung der Auffangwirkung beidseitig der Scheibe entlang dem Schlitz verlaufende Dichtlippen aus elastischem Material. Die beispielsweise aus Moosgummi bestehenden Dichtlippen können durch eine Auflage an der zum Mantelteil gewandten Seite der Leitwand gebildet sein. Im Arbeitseinsatz von der Scheibe mitgenommene Partikel des Bearbeitungsgutes werden durch die Dichtlippen abgestreift und aufgefangen.

Der Auffangraum steht vorzugsweise über einen Ableitkanal mit dem Austrittsstutzen in Verbindung, so dass auch jener Teil des Bearbeitungsgutes dem Austrittsstutzen zugeführt wird, welcher trotz der durch die Drehbewegung der Scheibe erzeugten Verwirbelung im Bereich der Bearbeitungsstelle verblieben ist. Dabei ist es zweckmässig, wenn zur Verbesserung der Zuführung des Bearbeitungsgutes in dem an den Auffangraum angrenzenden Bereich des Ableitkanals ein Luft vom Auffangraum zum Austrittsstutzen förderndes Gebläserad vorgesehen ist. Der durch das Gebläserad erzeugte Unterdruck steht durch den Ableitkanal in Verbindung mit dem Auffangraum, so dass ein Absaugen von Bearbeitungsgut von der Bearbeitungsstelle erfolgt. Die dem Gebläserad nachgeschaltete Ueberdruckseite des Ableitkanals mündet in den Austrittsstutzen.

Das Gebläserad ist vorteilhaft auf der Antriebswelle der Scheibe angeordnet. Dadurch wird ein einfacher, konstruktiver Aufbau erzielt, indem auf separate Antriebswellen für das Gebläserad und die Scheibe verzichtet werden kann.

Zur Verbesserung des Wirkungsgrades ist das Gebläserad vorzugseise über ein Uebersetzungsgetriebe mit der Antriebswelle der Scheibe verbunden. Dadurch kann die auf die Scheibe ausgerichtete Drehzahl der Antriebswelle von beispielsweise 6000 U/min auf eine für das Gebläserad ausgelegte Drehzahl von beispielsweise 20.000 U/min angehoben werden, was zu einer vollen Ausschöpfung der Wirkung des Gebläserades führt.

Die Erfindung wird nachstehend anhand von Zeichnungen, die Ausführungsbeispiele wiedergeben, näher erläutert. Es zeigen:
- Fig. 1: ein Handgerät mit Schutzhaube in Ansicht;
- Fig. 2: einen Schnitt durch die Schutzhaube, gemäss Schnittverlauf II-II in Fig. 1;
- Fig. 3: einen Schnitt durch die Schutzhaube, gemäss Schnittverlauf III-III in Fig. 2;
- Fig. 4: einen Schnitt durch die Schutzhaube, gemäss Schnittverlauf IV-IV in Fig. 2;
- Fig. 5: einen der Fig. 3 entsprechenden Schnitt durch eine andere Ausführungsform einer Schutzhaube.

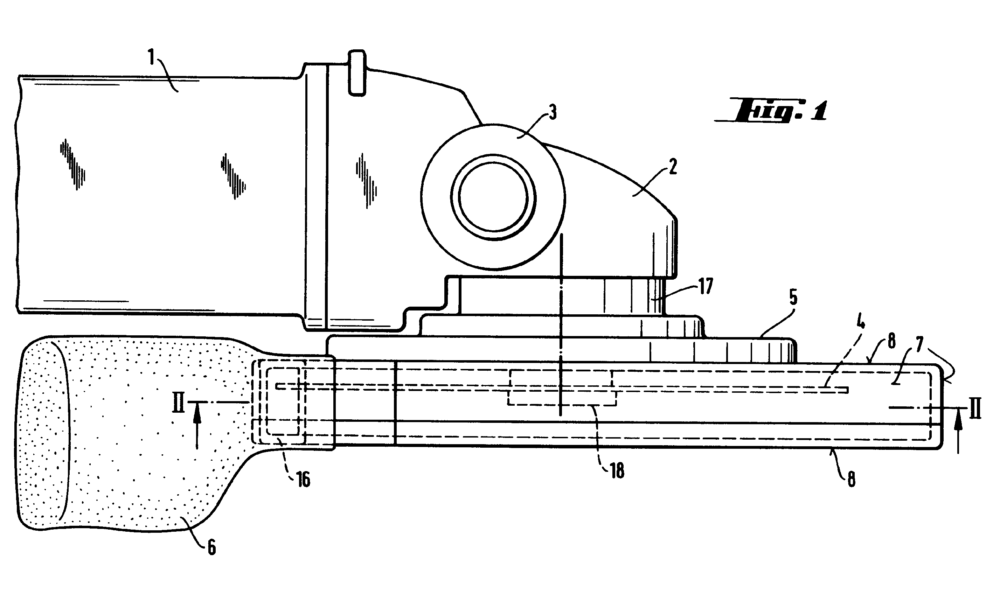

Bei dem Handgerät nach Fig. 1 handelt es sich um einen sogenannten Winkelschleifer, mit einem Motorgehäuse 1, einem daran angeflanschten Getriebekopf 2 mit davon seitlich abstehendem Zusatzhandgriff 3, einer als Trenn- oder Schleifscheibe ausgelegten Scheibe 4, einer die Scheibe 4 teilweise übergreifenden Schutzhaube 5 und einem an die Schutzhaube 5 angeschlossenen Filtersack 6.

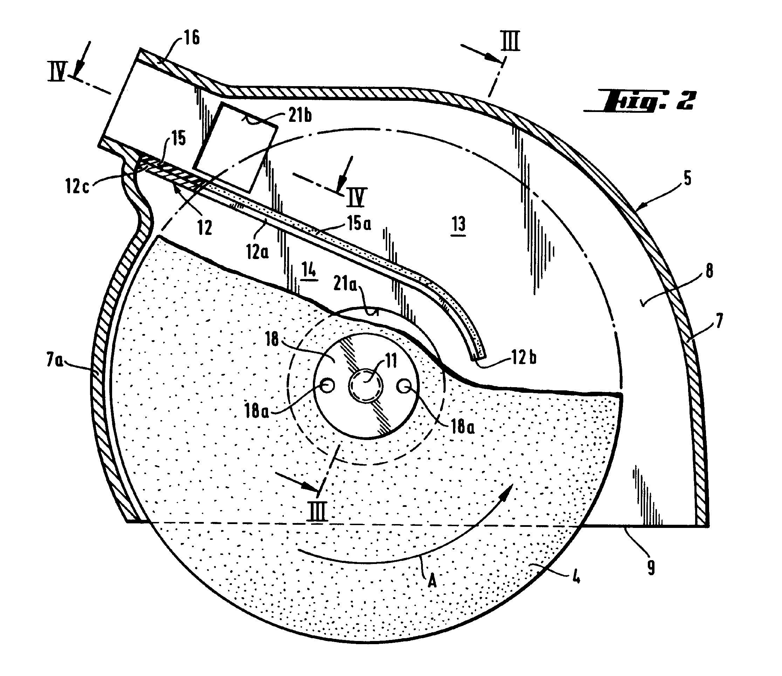

Wie der Fig. 2 zu entnehmen ist, wird die Scheibe 4 über etwa zwei Drittel der Umfangserstreckung von einem Mantelteil 7 und Seitenwänden 8 der Schutzhaube 5 übergriffen. Ein Segment der Scheibe 4 ragt durch eine Bearbeitungsöffnung 9 aus der Schutzhaube 5. Die Scheibe 4 sitzt zentral gefasst auf einer aus dem Getriebekopf 2 ragenden Antriebswelle 11, welche der Scheibe 4 eine Drehrichtung gemäss dem Pfeil A verleiht.

Der Innenraum der Schutzhaube 5 ist durch eine Leitwand 12, die sich zwischen den Seitenwänden 8 vom Mantelteil 7 gegen das Zentrum erstreckt, in einen vom Mantelteil 7 und von einem Teil der Bearbeitungsöffnung 9 begrenzten Ableitraum 13 und in einen zentralen Auffangraum 14 unterteilt. Letzterer ist durch einen Teil der Bearbeitungsöffnung 9 und den sich in Drehrichtung an den Ableitraum 13 anschliessenden restlichen Bereich 7a des Mantelteiles 7 begrenzt. An der dem Mantelteil 7 zugewandten Seite der Leitwand 12 ist eine Auflage 15, beispielsweise aus Moosgummi, angebracht, die in ihrer Längs- erstreckung ebenso wie ein Schlitz 12a in der Leitwand 12 von der Scheibe 4 durchgriffen wird. Der zentrumsseitige Endbereich 12b der Leitwand 12 ist entlang einem Radius konzentrisch gebogen und erstreckt sich über einen Winkel von etwa 45°. Der mantelseitige Endbereich 12c der Leitwand 12 fluchtet mit der Wandung eines von dem Mantelteil 7 nach aussen ragenden Austrittsstutzens 16. Der Austrittsstutzen 16 nimmt, wie in Fig. 1 gezeigt, den Filtersack 6 auf.

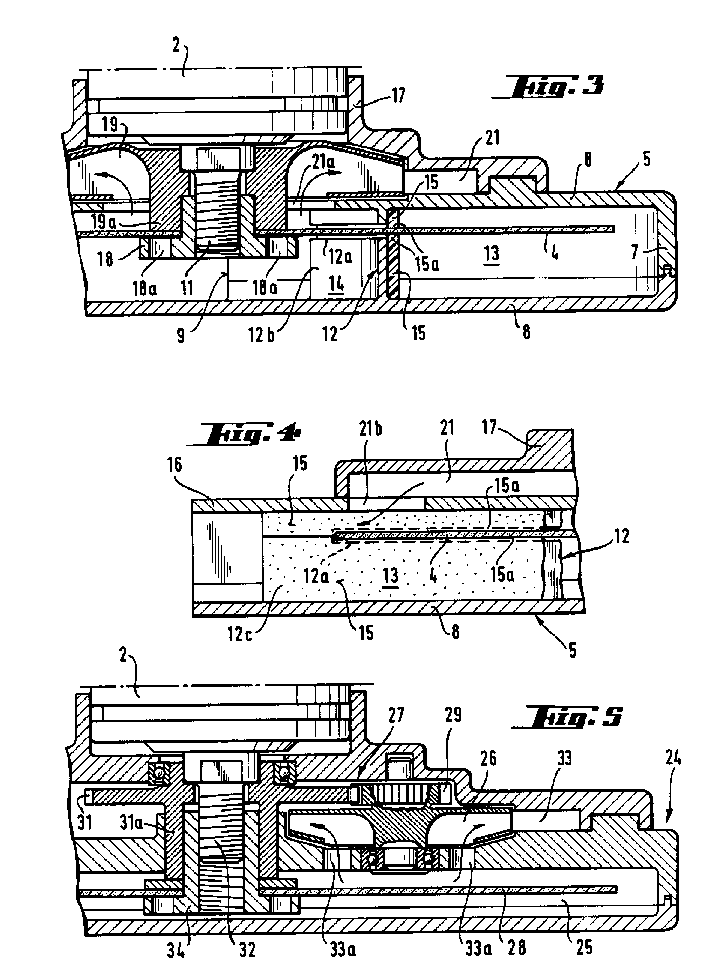

Der Fig. 3 ist die Schutzhaube 5 mit einem dieser zugeordneten Halsteil 17, das der Verbindung mit dem Getriebekopf 2 dient, entnehmbar. Diese Darstellung verdeutlicht den freien Durchtritt der Scheibe 4 durch den Schlitz 12a der Leitwand 12 und das seitliche Anliegen von durch die Auflage 15 gebildeten elastischen Dichtlippen 15a an der Scheibe 4.

Der Fig. 3 ist ferner die Antriebswelle 11 entnehmbar, durch welche eine Kopfmutter 18 mit Angriffsbohrungen 18a zum Festspannen der Scheibe 4 gegen die Nabe 19a eines Gebläserades 19 gezogen wird. Das auf diese Weise mit der Trennscheibe 4 verbundene und umlaufende Gebläserad 19 befindet sich in einem Ableitkanal 21, der sich von einem die Nabe 19a umgebenden Durchbruch 21a zu einer Mündung 21b im Austrittsstutzen 16 erstreckt, wie dies die Fig. 4 verdeutlicht.

Von der Scheibe 4 in den Ableitraum 13 der Schutzhaube 5 geschleudertes Bearbeitungsgut wird von der Leitwand 12 abgefangen und verlässt den Ableitraum 13 durch den Austrittsstutzen 16, um in den Filtersack 6 zu gelangen. An der Scheibe 4 haftendes Bearbeitungsgut wird durch die Dichtlippen 15a abgestreift und zusammen mit dem anderen den Ableitraum 13 passierenden Bearbeitungsgut abtransportiert. Allfälliges, nicht in den Ableitraum 13 gelangendes Bearbeitungsgut wird aus dem Auffangraum 14 über den Ableitkanal 21 zum Austrittsstutzen 16 gefördert. Dieser Fördervorgang wird durch das Gebläserad 19 unterstützt, welches unterdruckseitig über den Durchbruch 21a mit dem Auffangraum 14 und überdruckseitig durch die Mündung 21b mit dem Austrittsstutzen 16 in Verbindung steht.

In der Fig. 5, die eine Schutzhaube 24 mit einer hier nicht dargestellten Leitwand zur Unterteilung des Innenraumes in einen Ableitraum und einen Auffangraum 25 zeigt, ist ein Gebläserad 26 vorhanden, das durch ein Uebersetzungsgetriebe 27 in eine gegenüber der Scheibe 28 um ein Mehrfaches höhere Drehzahl versetzt wird. Das Uebersetzungsgetriebe besteht aus einem kleinen, mit dem Gebläserad 26 verbunden Zahnkranz 29 und einem demgegenüber grossen Zahnkranz 31, dem von der Antriebswelle 32 Drehbewegung vermittelt wird. Das Gebläserad 26 befindet sich in einem Ableitkanal 33, der mit Bohrungen 33a zum Auffangraum 25 hin und mit dem anderen Ende in einen nicht dargestellten Austrittsstutzen mündet. Gegen eine Nabe 31a wird mittels einer Kopfmutter 34 die Scheibe 28 festgespannt.

## Patentansprüche

1. Handgerät mit auf einer Antriebswelle (11, 32) angeordneter Trenn- oder Schleifscheibe und einer die Scheibe (4, 28) teilweise umgebenden Schutzhaube (5, 24) mit beidseits zur Scheibe (4, 28) parallel verlaufenden Seitenwänden (8), einem die Seitenwände (8) miteinander verbindenden, sich entlang einem Teil des Scheibenumfanges erstreckenden Mantelteil (7), einem das Mantelteil (7) durchsetzenden Austrittsstutzen (16) für das Bearbeitungsgut sowie einer den Durchtritt eines Segmentes der Scheibe (4, 28) erlaubende Bearbeitungsöffnung (9), **dadurch gekennzeichnet,** dass der Innenraum der Schutzhaube (5, 24) von einer im wesentlichen normal zwischen den Seitenwänden (8) angeordneten, mit einem Schlitz (12a) für den Durchtritt der Scheibe (4, 28) versehenen, vom Mantelteil (7) gegen das Zentrum verlaufenden Leitwand (12) in einen im wesentlichen vom Mantelteil (7) begrenzten peripheren Ableitraum (13) und einen im wesentlichen von der Bearbeitungsöffnung (9) begrenzten zentralen Auffangraum (14, 25) unterteilt ist, wobei zumindest der Ableitraum (13) mit dem Austrittsstutzen (16) in Verbindung steht.

2. Handgerät nach Anspruch 1, dadurch gekennzeichnet, dass der mantelseitige Endbereich (12c) der Leitwand (12) fluchtend in die Wandung des Austrittsstutzens (16) übergeht.

3. Handgerät nach Anspruch 1 oder 2, dadurch gekennzeichnet, dass der zentrumsseitige Endbereich (12b) der Leitwand (12) entlang einem Radius zum Zentrum gebogen ist.

4. Handgerät nach Anspruch 3, dadurch gekennzeichnet, dass der gebogene zentrumsseitige Endbereich (12b) der Leitwand (12) sich entlang einem Winkel von 30° bis 60° erstreckt.

5. Handgerät nach einem der Ansprüche 1 bis 4, dadurch gekennzeichnet, dass die Leitwand (12) beidseits der Scheibe (4, 28) entlang dem Schlitz (12a) verlaufende Dichtlippen (15a) aus elastischem Material trägt.

6. Handgerät nach einem der Ansprüche 1 bis 5, dadurch gekennzeichnet, dass der Auffangraum (14, 25) über einen Ableitkanal (21, 33) mit dem Austrittsstutzen (16) in Verbindung steht.

7. Handgerät nach Anspruch 6, dadurch gekennzeichnet, dass in dem an den Auffangraum (14, 25) angrenzenden Bereich des Ableitkanals (21, 33) ein Luft vom Auffangraum (14, 25) zum Austrittsstutzen (16) förderndes Gebläserad (19, 26) vorgesehen ist.

8. Handgerät nach Anspruch 7, dadurch gekennzeichnet, dass das Gebläserad (19) auf der Antriebswelle (11) der Scheibe (4) angeordnet ist.

9. Handgerät nach Anspruch 7, dadurch gekennzeichnet, dass das Gebläserad (26) über ein Uebersetzungsgetriebe (27) mit der Antriebswelle (32) der Scheibe (28) verbunden ist.

## Claims

1. Hand tool comprising a separating or grinding disc which is arranged on a driveshaft (11, 32), and a protective hood (5, 24), which partially surrounds the disc (4, 28) and which has lateral walls (8) extending in parallel on both sides of the disc (4, 28), a casing element (7) which connects the lateral walls (8) and which extends along a part of the disc circumference, an outlet socket (16) which passes through the casing element (7) for the processed material, as well as a work opening (9) which permits a segment of the disc (4, 28) to pass through, **characterised in that** the inner space of the protective hood (5, 24) is divided by a guide wall (19), which is normally arranged substantially between the lateral walls (8) and provided with a slot (12a) for passage of the disc (4, 28) and which extends from the casing element (7) towards the centre, into a peripheral deflection area (13) which is substantially defined by the casing element (7), and into a central receptacle (14, 25) which is substantially defined by the work opening (9), wherein at least the deflection area (13) is connected to the outlet socket (16).

2. Hand tool according to claim 1, **characterised in that** the end region (12c) of the guide wall (12) at the the casing positively merges into the wall of the outlet socket (16).

3. Hand tool according to claim 1 or 2, **characterised in that** the end region (12b) of the guide wall (12) at the centre is curved along a radius towards the centre.

4. Hand tool according to claim 3, **characterised in that** the curved centre end region (12b) of the guide wall (12) extends along at an angle of between 30̸° and 60̸°.

5. Hand tool according to one of claims 1 to 4, **characterised in that** the guide wall (12) has sealing lips (15a) of an elastic material extending along the slot (12a) on both sides of the disc (4, 28).

6. Hand tool according to one of claims 1 to 5, **characterised in that** the receptacle (14, 25) is connected to the outlet socket (16) via a deflection channel (21, 33).

7. Hand tool according to claim 6, **characterised in that** a blower wheel (19, 26) for conveying air from the receptacle (14, 25) to the outlet socket (16) is provided in the area of the deflection channel (21, 33) adjacent the receptacle (14, 25).

8. Hand tool according to claim 7, **characterised in that** the blower wheel (19) is arranged on the driveshaft (11) of the disc (4).

9. Hand tool according to claim 7, **characterised in that** the blower wheel (26) is connected to the driveshaft (32) of the disc (28) via a gearing (27).

## Revendications

1. Appareil à main, comprenant un disque à tronçonner ou une meule monté sur un arbre moteur (11, 32) ainsi qu'un capot de protection (5, 24) qui enveloppe partiellement le disque (4, 28) et comporte des parois latérales (8) s'étendant des deux côtés du disque (4, 28), un élément d'enveloppe (7) qui réunit les parois latérales (8) et s'étend le long d'une partie de la circonférence du disque, une tubulure de sortie (16) qui traverse l'élément d'enveloppe (7) pour les matières enlevées par l'usinage, ainsi qu'une ouverture d'usinage (9) qui permet le passage d'un segment du disque (4, 28), caractérisé en ce que l'intérieur du capot de protection (5, 24) est divisé par une paroi de guidage (12) disposée sensiblement verticalement entre les parois latérales (8), munie d'une fente (12a) pour le passage du disque (4, 28) et s'étendant de l'élément d'enveloppe (7) en direction du centre, en un espace d'évacuation périphérique (13) essentiellement délimité par l'élément d'enveloppe (7) et un espace collecteur central (14, 25) essentiellement délimité par l'ouverture d'usinage (9), au moins l'espace d'évacuation (13) communiquant avec la tubulure de sortie (16).

2. Appareil à main selon la revendication 1, caractérisé en ce que la zone terminale (12c) de la paroi de guidage (12), située du côté de l'élément d'enveloppe, se raccorde à la paroi de la tubulure de sortie (16).

3. Appareil à main selon l'une des revendications 1 ou 2, caractérisé en ce que la zone terminale (12b) de la paroi de guidage (12), située du côté du centre, est cintrée le long d'un rayon en direction du centre.

4. Appareil à main selon la revendication 3, caractérisé en ce que la zone terminale cintrée (12b) de la paroi de guidage (12), située du côté du centre, est inclinée sous un angle de 30° à 60°.

5. Appareil à main selon l'une des revendications 1 à 4, caractérisé en ce que la paroi de guidage (12) porte des lèvres d'étanchéité (15a) réalisées dans un matériau élastique et s'étendant, de part et d'autre du disque (4, 28), le long de la fente (12a).

6. Appareil à main selon l'une des revendications 1 à 5, caractérisé en ce que l'espace collecteur (14, 25) commu-nique avec la tubulure de sortie (16) par l'intermédiaire d'un canal d'évacuation (21, 33).

7. Appareil à main selon la revendication 6, caractérisé en ce que dans la région du canal d'évacuation (21, 33) avoisinant l'espace collecteur (14, 25) est prévue une roue de ventilateur (19, 26) qui amène de l'air de l'espace collecteur (14, 25) vers la tubulure de sortie (16).

8. Appareil à main selon la revendication 7, caractérisé en ce que la roue de ventilateur (19) est montée sur l'arbre moteur (11) du disque (4).

9. Appareil à main selon la revendication 7, caractérisé en ce que la roue de ventilateur (26) est couplée avec l'arbre moteur (32) du disque (28) par l'intermédiaire d'un démultiplicateur (27).
